# EUROPÄISCHE PATENTSCHRIFT

(11) **EP 2 294 361 B1**
(45) Veröffentlichungstag und Bekanntmachung des Hinweises auf die Patenterteilung: **16.03.2016**
(21) Anmeldenummer: 09769069.7
(22) Anmeldetag: 29.04.2009
(51) Int. Cl.: G01C 21/34

(54) **VERFAHREN ZUR ROUTENBESTIMMUNG IN EINEM NAVIGATIONSSYSTEM UND NAVIGATIONSSYSTEM**
METHOD FOR ROUTE DETERMINATION IN A NAVIGATION SYSTEM, AND A NAVIGATION SYSTEM
PROCÉDÉ POUR LA DÉTERMINATION D'UN ITINÉRAIRE DANS UN SYSTÈME DE NAVIGATION ET SYSTÈME DE NAVIGATION

(30) Priorität: 26.06.2008 DE 102008002695
(43) Veröffentlichungstag der Anmeldung: 16.03.2011
(73) Patentinhaber: Robert Bosch GmbH, 70442 Stuttgart (DE)
(72) Erfinder: RYCHLAK, Stefan, 31241 Ilsede (DE); KERSKEN, Ulrich, 31199 Diekholzen (DE)
(86) Internationale Anmeldenummer: PCT/EP2009/055169
(87) Internationale Veröffentlichungsnummer: WO 2009/156220

(56) Entgegenhaltungen:
- DE-C1- 19 605 458
- JP-A- 2000 002 553
- US-A1- 2008 133 120

## Beschreibung

### Stand der Technik

Die Erfindung geht von einem Verfahren zur Bestimmung einer Route von einem Ausgangs- zu einem Zielpunkt in einem Navigationssystem für ein Kraftfahrzeug sowie einem Navigationssystem für ein Kraftfahrzeug mit Mitteln zur Bestimmung einer Route von einem Ausgangs- zu einem Zielpunkt nach der Gattung der unabhängigen Patentansprüche aus.

Aus der Druckschrift EP 1 721 127 B1 ist ein Fahrzeugnavigationssystem bekannt, das nach Eingabe eines Ziels durch den Benutzer bzw. Fahrzeugführer und Bestimmung einer aktuellen Fahrzeugposition mittels Positionsbestimmungsmitteln eine Route vom aktuellen Standort zum eingegeben Ziel ermittelt und den Benutzer entlang dieser Route führt. Dazu wird regelmäßig die aktuelle Fahrzeugposition ermittelt und mit der berechneten Route abgeglichen und für den Fall, dass ein Fahrmanöver, wie etwa ein Abbiegevorgang zum Befolgen der Route, erforderlich wird, ein entsprechender Hinweis an den Benutzer ausgegeben.

Aus der Druckschrift EP 1 593 937 A1 ist weiter ein Navigationssystem für Kraftfahrzeuge bekannt, welches eine Route von einem Ausgangs- zu einem Zielpunkt bestimmt, wobei bei der Routenbestimmung ein Faktor berücksichtigt wird, der den Energieverbrauch und damit auch den Schadstoffausstoß beim Zurücklegen der Route beeinflusst. Ziel ist dabei eine möglichst energiesparende Route. Dazu werden insbesondere Steigungs- und Gefällestrecken sowie eine Beladung des Fahrzeugs berücksichtigt. Weiter werden auch die Arten von Straßen, insbesondere Straßenklasse wie Landstraße oder Autobahn sowie die Straßenverhältnisse berücksichtigt. Weiter werden bekannte Unfall- und Stauschwerpunkte berücksichtigt.

Aus der Druckschrift US 2008 / 0133120 A1 ist ein Verfahren zur Bestimmung einer Route von einem Ausgangs- zu einem Zielpunkt in einem Navigationssystem für ein Kraftfahrzeug bekannt, wobei bei der Routenbestimmung ein Faktor berücksichtigt wird, der den Energieverbrauch oder den Schadstoffausstoß beim Zurücklegen der Route beeinflusst. Dabei wird vorgeschlagen, dass die Lage des Straßennetzes, die Häufigkeit von Stillständen, die Geographie des Geländes und die geschätze Fahrzeuggeschwindigkeit durch das Navigationssystem ausgewertet wird. Nachteilhafterweise kann jedoch eine einmal ausgewertete längere Stillstandszeit auf einer möglichen, ansonsten vorteilhaften Fahrroute zu einer dauerhaften Veränderung ausgewählter Fahrrouten führen, wenn eine längere Stillstandszeit beispielsweise die Folge eines einmaligen Ereignisses war.

Aus der Druckschrift DE 196 05 458 C1 ist ebenfalls ein Verfahren zur Bestimmung einer Route von einem Ausgangs- zu einem Zielpunkt in einem Navigationssystem für ein Kraftfahrzeug bekannt, wobei bei der Routenbestimmung ein Faktor berücksichtigt wird, der den Energieverbrauch oder den Schadstoffausstoß beim Zurücklegen der Route beeinflusst. Das System hierzu weist eine Antenne auf, die am Farhzeug vorhanden ist und zum Empfang von Signalen dient, die von GPS Satelliten übertragen werden. Diese Antenne empfängt auch Signale, die lokale Verkahrsbedingungen wie Stau, Unfälle, durchschnittliche Wartezeiten an Ampeln und Baustellen wiedergeben. Diese Daten müssen nachteilhafterweise jedoch aktuell zur Verfügung stehen und zuverlässig empfangen werden.

### Vorteile der Erfindung

Die Erfindung mit den Merkmalen der unabhängigen Patentansprüche bildet den vorgenannten Stand der Technik vorteilhaft weiter.

Dazu ist vorgesehen, dass bei der Routenberechnung neben dem Energieverbrauch und/oder Schadstoffausstoß, der sich aus dem Befahren von Streckenabschnitten ergibt, auch ein Energieverbrauch und/oder Schadstoffausstoß berücksichtigt wird, der aus Stillständen des Fahrzeugs während dem Zurücklegen der Route resultiert. Insbesondere werden Wartezeiten an Kreuzungen, Einmündungen, Ampeln, Bahnübergängen und dergleichen berücksichtigt. So verbraucht eine laufende Antriebsmaschine auch beim Stillstand eines Kraftfahrzeugs Energie, obwohl keine Wegstrecke zurückgelegt wird, beispielsweise zur Überwindung der inneren Reibung einer Brennkraftmaschine sowie zum Antreiben der sogenannten Nebenaggregate wie Generator, Klimakompressor und dergleichen. Aber auch ein Abstellen der Antriebsmaschine während absehbar längerer Stillstände ist zumindest beim erneuten Starten der Antriebsmaschine mit Energieaufwand und im Falle von Brennkraftmaschinen erhöhtem Schadstoffausstoß verbunden. Erfindungsgemäß wird dabei der Faktor bzw. die durch den Faktor bezeichneten Werte für Energieverbrauch und/oder Schadstoffausstoß statistisch aus Stillstandzeiten während zurückliegender Fahrten bestimmt. Dazu wird bei einem erkannten Stillstand die Dauer des Stillstandes des Kraftfahrzeugs bestimmt.

Vorteilhaft wird die Stillstandsdauer dabei ortsbezogen bestimmt. Dazu wird der Ort des Stillstandes mit Positionsbestimmungsmitteln erfasst und die Stillstandsdauer dieser bestimmten Position, beispielsweise einer bestimmten Kreuzung im Straßennetz oder einer bestimmten Ampel oder dergleichen zugeordnet. Weiter wird die Stillstandsdauer bevorzugt auch situationsbezogen erfasst. Dazu wird beispielsweise bestimmt, ob der Stillstand an einer Kreuzung bei geplanter Geradeausfahrt oder stattdessen etwa bei einem Linksabbiegevorgang erfolgt. Dem liegt die Erkenntnis zugrunde, dass ein Linksabbiegevorgang wegen des Erfordernisses einer Kreuzung des Gegenverkehrs mit längerem Stillstand verbunden sein kann, als ein Stillstand bei einer Weiterfahrt geradeaus. Ein Linksabbiegvorgang kann dabei durch den betätigten Blinker erkannt werden. Weiter wird vorteilhaft der spezifische Energieverbrauch oder Schadstoffausstoß während eines Stillstandes bestimmt, so dass aus der Wartezeit und dem spezifischen Energieverbrauch oder Schadstoffausstoß Absolutwerte für Energieverbrauch oder Schadstoffausstoß bestimmt werden können. Spezifischer Schadstoffausstoß und Energieverbrauch können vorzugsweise weiterhin auch jahreszeitenabhängig ermittelt werden, da die Werte im Winterbetrieb voraussehbar höher als im Sommerbetrieb ausfallen.

Diese erfassten Daten werden vorteilhaft mit statistischen Methoden ausgewertet und abgespeichert und stehen damit für eine neue Routenberechnung zur Verfügung. Vorteilhaft werden diese erfassten und ausgewerteten Daten auch auf potenzielle, weitere, gleichartige oder vergleichbare Stillstandsorte, die noch nicht befahren wurden, übertragen. Somit liegen bereits nach kurzer Zeit Daten für Stillstandsorte des gesamten Straßennetzes vor, auf deren Grundlage eine Routenberechnung mit dem Ziel eines geringen Energieverbrauchs oder Schadstoffausstoßes möglich ist.

Im Rahmen einer Routenberechnung von einem Ausgangsort, der ein Startort oder auch ein gerade aktueller Standort sein kann, zu einem Zielort werden neben streckenbezogenen Energieverbrauchswerten, wie aus EP 1 593 937 A1 bekannt, auch die stillstandsbezogenen Energieverbrauchs- und oder Schadstoffausstoßwerte im Sinne einer Minimierung über die Gesamtroute, gegebenenfalls gewichtet neben weiteren Optimierungskriterien wie beispielsweise minimale Gesamtfahrzeit, berücksichtigt.

### Zeichnungen

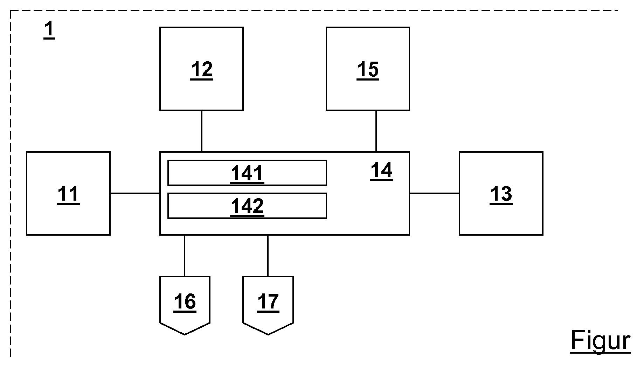

Ausführungsbeispiele der Erfindung sind in der Figur dargestellt und werden nachfolgend näher erläutert.

Die Figur zeigt ein vereinfachtes Blockschaltbild des erfindungswesentlichen Teils eines Navigationssystems zur Verwendung in einem Kraftfahrzeug.

### Beschreibung der Ausführungsbeispiele

In der Figur ist ein Navigationssystem 1 zum Betrieb in einem Kraftfahrzeug dargestellt. Unter Kraftfahrzeug wird hier ein Fahrzeug mit einer Antriebsmaschine verstanden, welche das Fahrzeug unter Aufwendung von Energie antreibt. Die Antriebsmaschine ist beispielsweise eine an sich bekannte Brennkraftmaschine in Form eines Diesel- oder Ottomotors, die aus Brennkraftstoff neben einem Antriebsmoment für das Fahrzeug und sogenannte Nebenaggregate wie Generator, Klimaanlage und dergleichen auch Schadstoffe wie insbesondere Stickoxide und Kohlendioxid erzeugt. Da heute bekannte Abgasreinigungsmaßnahmen primär auf einen stationären Betriebszustand unter Teillastbedingungen ausgelegt sind, werden insbesondere bei Beschleunigungsvorgängen und beim Starten solcher Brennkraftmaschinen besonders hohe Schadstoffmengen erzeugt und emittiert. Auch ist hier der Energieverbrauch erhöht.

Das Navigationssystem 1 umfasst in an sich bekannter und daher hier nicht näher erläuterter Weise Positionsbestimmungsmittel 11 zur Bestimmung eines aktuellen Standorts, beispielsweise auf Grundlage von Funksignalen eines Satellitennavigationssystems wie GPS oder GALILEO, eine digitale Karte 12 in Form eines Datenspeichers, wie CD-ROM, Flash-Speicher oder dergleichen mit darin enthaltenen Informationen über Streckenabschnitte und Knotenpunkte, wie Kreuzungen, Einmündungen usw. eines Straßennetzes, eine Benutzerschnittstelle 13 zur Eingabe eines Fahrziels und zur Ausgabe von Zielführungshinweisen zur Befolgung einer bestimmten Fahrroute und einen Rechner 14 mit Betriebsprogramm 141 unter anderem zur Bestimmung einer Route von einem Ausgangsort zu einem vom Benutzer vorgegebenen Zielort und zur Erzeugung der Zielführungshinweise durch Abgleich eines aktuellen Standorts mit der bestimmten Fahrroute.

Das Navigationssystem 1 weist weiterhin eine Statistikkomponente 142 auf, die vorzugsweise als Softwaremodul ausgebildet ist, welches vom Rechner 14 des Navigationssystems 1 abgearbeitet wird. Aufgabe der Statistikkomponente 142 ist es, bei erkanntem Stillstand des Fahrzeugs während einer Fahrt die Dauer des Stillstands mit den Dauern zurückliegender Stillstände abzugleichen und daraus eine neue Stillstandsdauer unter Verwendung statistischer Methoden zu erzeugen. Bei dem hier beschriebenen bevorzugten Ausführungsbeispiel erfolgt die Bestimmung der Stillstandsdauern ortsbezogen. Dazu sind in Frage kommende Orte der digitalen Karte 12, also vornehmlich Kreuzungen, Einmündungen, Ampelanlagen, Bahnübergänge und andere Orten, an denen sich regelmäßig Stillstände eines Fahrzeugs ergeben, in einem Zusatzdatenspeicher 15 Stillstandsdauern zugeordnet. Diese ortsbezogenen Stillstandsdauern werden mit aktuell ermittelten Stillstandsdauern nach statistischen Methoden aktualisiert. Weiter werden die Stillstandsdauer-Daten bevorzugt nicht nur ortbezogen, sondern darüber hinaus auch situationsbezogen erfasst, ausgewertet und gespeichert. So erhalten beispielsweise Kreuzungen mit der Möglichkeit einer Geradeausfahrt oder eines Rechtsabbiegens einerseits und der Möglichkeit eines Linksabbiegens andererseits jeweils verschiedene Stillstandsdauerwerte.

Die Statistikkomponente 142 wertet Daten sowohl bei aktiver Zielführung, wenn also eine Route berechnet ist und der Fahrzeugführer entlang dieser Route mit Fahrhinweisen des Navigationssystems 1 geführt wird, also auch vorzugsweise ohne aktive Zielführung aus. Besonders vorteilhaft ist offensichtlich eine hohe Wiederholrate der Datenerfassung, dies ist insbesondere bei regelmäßigem Befahren derselben Strecke, etwa bei Berufspendlern, gegeben.

Für bislang nicht befahrene potenzielle Stillstandsorte können vorteilhaft Daten bereits befahrener, gleichartiger oder vergleichbarer Stillstandsorte auf die noch nicht befahrenen Stillstandsorte übertragen werden.

Sofern der Energieverbrauch oder Schadstoffausstoß für den Stillstand des Fahrzeugs pro Zeiteinheit bekannt ist, lassen sich hieraus Werte für den durchschnittlichen Energieverbrauch oder Schadstoffausstoß an einem bestimmten Ort berechnen.

Für eine nachfolgende Routenberechnung werden neben streckenbezogenen Werten für Energieverbrauch oder Schadstoffausstoß gemäß EP 1 593 937 A1 auch die beschriebenen Werte für Stillstandsorte, also insbesondere Werte für Kreuzungen, Einmündungen, also Knotenpunkte des Verkehrswegenetzes, und dergleichen berücksichtigt. Damit wird das Ergebnis der Routenberechnung bzw. die Aussage über den Gesamtenergieverbrauch oder Gesamtschadstoffausstoß über die Gesamtroute erheblich genauer und verlässlicher.

In vorteilhafter Weiterbildung der Erfindung kann die Statistikkomponente 142 weiterhin auch dazu dienen, die typischen spezifischen Energieverbrauchswerte und Schadstoffausstoßwerte während eines Fahrzeugstillstandes, also Energieverbrauch pro Zeiteinheit oder Schadstoffausstoß pro Zeiteinheit zu bestimmen. Dazu wird auf einen Energieverbrauchssensor 16, etwa einen Kraftstoffdurchflussmengenmesser sowie einen Abgassensor 17 zugegriffen. Die von diesen Sensoren 16, 17 erfassten Werte werden vorzugsweise in Abhängigkeit von Umgebungsbedingungen, insbesondere Außentemperatur oder alternativ in Abhängigkeit der Jahreszeit ausgewertet und im Zusatzdatenspeicher 15 abgelegt.

Neben einer rein energieverbauchsoptimierten oder schadstoffausstoßoptimierten Routenberechnung kann eine Route auch unter zusätzlicher Berücksichtigung eines weiteren Optimierungskriteriums, wie beispielsweise geringst mögliche Fahrzeit, kürzeste Strecke oder dergleichen bestimmt werden.

Weiter kann die Route auch ausschließlich als kürzeste, schnellste oder Mischung dieser beiden oder anderer Kriterien optimierte Route berechnet werden. Zu einer oder mehreren solcher Alternativrouten kann ergänzend der Energieverbrauch oder Schadstoffausstoß bestimmt und als zusätzliches Auswahlkriterium dem Benutzer zur Auswahl einer von mehreren Routen ausgegeben werden. Somit erhält der Benutzer die Möglichkeit, eine möglicherweise hinsichtlich eines primären Optimierungskriteriums nicht optimale Route auszuwählen, weil diese einen geringeren Energieverbrauch oder Schadstoffausstoß als die optimale Route bedingt.

In Weiterbildung der Erfindung kann das Navigationssystem 1 im Rahmen einer aktiven Zielführung auch Informationen an den Benutzer bzw. Fahrzeugführer über einen bevorstehenden Stillstand des Fahrzeugs ausgeben, wenn sich der Fahrzeugstandort beispielsweise einer Kreuzung annähert. Für den Fall, dass die durchschnittliche Wartezeit an dieser Kreuzung einen bestimmten Schwellwert überschreitet, kann vorteilhaft eine Empfehlung zum Abstellen der Antriebsmaschine an den Benutzer ausgegeben werden. Alternativ kann auch die Antriebsmaschine automatisch abgestellt werden, wenn das Fahrzeug an dieser Kreuzung tatsächlich zum Stillstand kommt.

## Patentansprüche

1. Verfahren zur Bestimmung einer Route von einem Ausgangs- zu einem Zielpunkt in einem Navigationssystem (1) für ein Kraftfahrzeug, wobei bei der Routenbestimmung ein Faktor berücksichtigt wird, der den Energieverbrauch oder den Schadstoffausstoß beim Zurücklegen der Route beeinflusst, und wobei der Faktor den Energieverbrauch oder Schadstoffausstoß bei Stillständen des Kraftfahrzeugs während dem Zurücklegen der Route bezeichnet,
**dadurch gekennzeichnet,**
**dass** der Faktor statistisch aus Stillstandszeiten zurückliegender Fahrten des Kraftfahrzeugs bestimmt wird.

2. Verfahren nach Anspruch 1, **dadurch gekennzeichnet, dass** der Faktor ortsbezogen bestimmt wird.

3. Verfahren nach einem der Ansprüche 1 oder 2, **dadurch gekennzeichnet, dass** der Faktor situationsbezogen bestimmt wird.

4. Navigationssystem (1) für ein Kraftfahrzeug mit Mitteln (14, 141) zur Bestimmung einer Route von einem Ausgangs- zu einem Zielpunkt, wobei bei der Routenbestimmung ein Faktor berücksichtigt wird, der den Energieverbrauch oder den Schadstoffausstoß beim Zurücklegen der Route beeinflusst, und wobei der Faktor den Energieverbrauch oder Schadstoffausstoß bei Stillständen des Kraftfahrzeugs während dem Zurücklegen der Route bezeichnet,
**dadurch gekennzeichnet,**
**dass** eine Statistikkomponente (142) zur statistischen Bestimmung des Faktors aus Stillstandszeiten zurückliegender Fahrten des Kraftfahrzeugs vorgesehen ist.

5. Navigationssystem nach Anspruch 4, **gekennzeichnet durch** einen Zusatzdatenspeicher (15) zur orts- und/oder situationsbezogenen Speicherung des Faktors.

## Claims

1. Method for determining a route from a starting point to a destination in a navigation system (1) for a motor vehicle, wherein the route determination takes account of a factor that influences the energy consumption or the pollutant emissions while covering the route, and wherein the factor denotes the energy consumption or pollutant emissions for stoppages by the motor vehicle while covering the route,
**characterized**
**in that** the factor is statistically determined from stoppage times for past journeys by the motor vehicle.

2. Method according to Claim 1, **characterized in that** the factor is determined on the basis of location.

3. Method according to either of Claims 1 and 2, **characterized in that** the factor is determined on the basis of situation.

4. Navigation system (1) for a motor vehicle having means (14, 141) for determining a route from a starting point to a destination, wherein the route determination takes account of a factor that influences the energy consumption or the pollutant emissions while covering the route, and wherein the factor denotes the energy consumption or pollutant emissions for stoppages by the motor vehicle while covering the route,
**characterized**
**in that** a statistical component (142) is provided for statistically determining the factor from stoppage times for past journeys by the motor vehicle.

5. Navigation system according to Claim 4, **characterized by** a supplementary data memory (15) for storing the factor on the basis of location and/or situation.

## Revendications

1. Procédé pour la détermination d'un itinéraire depuis un point de départ jusqu'à un point de destination dans un système de navigation (1) pour un véhicule automobile, dans lequel on tient compte, lors de la détermination de l'itinéraire, d'un facteur qui influence la consommation d'énergie ou l'émission de polluants lors du parcours de l'itinéraire, et dans lequel le facteur indique la consommation d'énergie ou l'émission de polluants lors d'arrêts du véhicule automobile pendant le parcours de l'itinéraire, **caractérisé en ce que** l'on détermine le facteur de façon statistique à partir de temps d'arrêt de trajets antérieurs du véhicule automobile.

2. Procédé selon la revendication 1, **caractérisé en ce que** l'on détermine le facteur en relation avec le lieu.

3. Procédé selon l'une des revendications 1 ou 2, **caractérisé en ce que** l'on détermine le facteur en relation avec la situation.

4. Système de navigation (1) pour un véhicule automobile avec des moyens (14, 141) pour la détermination d'un itinéraire depuis un point de départ jusqu'à un point de destination, dans lequel on tient compte, lors de la détermination de l'itinéraire, d'un facteur qui influence la consommation d'énergie ou l'émission de polluants lors du parcours de l'itinéraire, et dans lequel le facteur indique la consommation d'énergie ou l'émission de polluants lors d'arrêts du véhicule automobile pendant le parcours de l'itinéraire, **caractérisé en ce qu'**il est prévu une composante statistique (142) pour la détermination statistique du facteur à partir de temps d'arrêts de trajets antérieurs du véhicule automobile.

5. Système de navigation selon la revendication 4, **caractérisé par** une mémoire de données additionnelle (15) pour le stockage du facteur en relation avec le lieu et/ou avec la situation.
